# EUROPÄISCHE PATENTANMELDUNG

(11) **EP 1 715 178 A1**
(43) Veröffentlichungstag der Anmeldung: **25.10.2006**
(21) Anmeldenummer: 06004307.2
(22) Anmeldetag: 03.03.2006
(51) Int. Cl.: F02N 11/00

(54) **Energieversorgungsschaltung**

(30) Priorität: 21.04.2005 DE 102005018620
(71) Anmelder: Rheinmetall Landsysteme GmbH, 24107 Kiel (DE)
(72) Erfinder: Hernekamp, Christoph, Dr., 24229 Strande (DE); Heusing, Stefan, 17489 Greifswald (DE); Ziegenbalg, Marc, 93309 Kelheim (DE)
(74) Vertreter: Dietrich, Barbara

(57) **Zusammenfassung**

Vorgeschlagen wird, insbesondere im Startmoment eines Motors, eine weitere Energiequelle, einen Energiespeicher (2), dem Bordnetz etc. unter Vermeidung einer zweiten Spannungsebene zuzuschalten, wobei das Wegschalten zumindest bei der Motorabschaltung vorgenommen wird. Es wird insbesondere das Bekanntsein der Eigenschaften der Ultra-Caps (4), die Energie sehr viel schneller speichern und wieder zur Verfügung stellen können, ausgenutzt. Die einfache Energieversorgungsschaltung (1) mit dem Energiespeicher (2) erlaubt einen Platz sparenden Einbau beispielsweise in einem Fahrzeug.

## Beschreibung

In Fahrzeugen stellt sich bei tiefen Einsatztemperaturen das Problem, dass die Fahrzeugbatterie häufig die nötige Energie zum Anziehen der Relais und Starten des Treibwerkes nicht mehr gewährleistet. Entsprechend wird in der Regel eine separate, in der Regel tragbare Starthilfe verwendet oder eine aufwendige Motorerwärmung vorgenommen.

In der DE 197 58 472 A1 wird eine Steuer- und Regelungsanlage für eine konstante Motorvorwärmung beschrieben. Aus der DE 44 02 215 A1 ist ein Verfahren zur Verbesserung des Kaltstartverhaltens von Verbrennungsmaschinen bekannt. Eine Startanlage für einen Dieselmotor wird in der DE 198 09 399 C2 vorgeschlagen.

Die DD 260 307 A1 beschäftigt sich mit einer Einrichtung zur Verbesserung des Zündverhaltens von konventionellen Zündstromkreisen, während die DD 230 045 A1 ein weiteres Verfahren zum Anlassen von Verbrennungsmotoren offenbart. Eine Starhilfe für Otto-Motore ist der DE 37 38 004 A1 entnehmbar.

Aus der DE 694 07 372 T2 (EP 0 644 330 B1) ist eine mikroprozessorbetriebene Kaltstartsteuerung für Dieselmotore bekannt.

In der DE 102 31 379 B3 wird ein Antriebssystem für ein Kraftfahrzeug mit einem Verbrennungsmotor und einer elektrischen Maschine offenbart. Die Maschine wird dabei als Starter/Generator betrieben. Ein zweiter Energiespeicher ist mit einem ersten Energiespeicher, beispielsweise mit einer Bordnetzbatterie derart verschaltet, dass beim Starten der elektrischen Maschine eine elektrische Spannung zur Verfügung gestellt wird, welche über der Bordnetzspannung liegt.

Eine weitere Energieversorgungsschaltung für ein Kraftfahrzeug- Bordnetz beschreibt die DE 103 05 058 B3. Ausgehend von bekannten ISAD Systemen, die als Energiespeicher einen Ultra-Cap verwenden, wird vorgeschlagen, eine direkte Kopplung des Energiespeichers mit einem Starter/Generator und damit mit dem Bordnetz vorzunehmen, um einen DC/DC - Wandler nicht mehr auf die maximale Leistung eines Energiespeichers auszulegen zu müssen.

UltraCap werden als Speichermedium für Hybridfahrzeuge durch die Firma EPCOS angeboten. In einem Beitrag von Auto Motor und Sport Ausgabe 11/2004 auf den Seiten 62 ff. (siehe auch
http://www.epcos.com/web/generator/Web/Sections/CompanyProfile/Stratepy/Ultracap/PDF BMW,property=Data en.pdf;/PDF BMW.pdf) wird ausgeführt, dass so genannte Ultra-Caps, bei denen es sich um Doppelschicht- Kondensatoren handelt, kurzfristig eine sehr hohe Leistungsdichte zur Verfügung stellen, sich aber im Gegensatz zu üblichen Batterien sehr schnell wieder aufladen lassen.

Hier greift die Erfindung die Aufgabe auf, insbesondere die Startfähigkeit von Motoren bei tiefen Temperaturen mit einfachen Mitteln zu verbessern.

Gelöst wird die Aufgabe durch die Merkmale des Patentanspruchs 1 und des Patentanspruchs 2.

Der Erfindung liegt die Idee zugrunde, insbesondere im Startmoment eine weitere Energiequelle, einen Energiespeicher, dem Bordnetz unter Vermeidung einer zweiten Spannungsebene zuzuschalten, wobei das Wegschalten zumindest bei der Motorabschaltung vorgenommen wird. Es wird insbesondere das Bekanntsein der Eigenschaften der Ultra-Caps, die Energie sehr viel schneller speichern und wieder zur Verfügung stellen können, ausgenutzt. Eine gleichermaßen vereinfachte elektrische Anbindung erlaubt einen Platz sparenden Einbau im Fahrzeug.

Die Integration der weiteren Energiequelle, beispielsweise in ein Panzerfahrzeug, erfolgt in Weiterführung der Erfindung als universeller Einbau in das Fahrzeug, wobei zusätzlich die Option der bekannten Starthilfe mit einem tragbaren Gehäuse bewahrt wird. Dies wird dadurch realisiert, dass sowohl die elektronische Beschaltung als auch die Gehäusekonstruktion der Energieversorgungsschaltung mit dem Energiespeicher daraufhin berücksichtigt werden. Bevorzugt wird die Beschaltung im Gehäuse des Energiespeichers integriert. Das Gehäuse wird dann mit einer Steckverbindung über ein Kabel oder dergleichen mit einem Schaltpult oder Steuerknoten etc. des Fahrzeugs verbunden.

Die elektronische Beschaltung hat bei einem Dieselmotor die vorrangige Aufgabe, den Energiespeicher beim Starten zuzuschalten und beim Ausschalten des Motors wieder vom Bordnetz zu trennen.

Die Verwendung von Doppelschichtkondensatoren stellt eine beachtliche Verbesserung für das Bordnetzverhalten dar. Sie können selbst bei tiefen Temperaturen (auch unter -45° C) lange Zeit einen hohen Strom bereitstellen. Sie verbessern das allgemeine Startverhalten und sind in der Lage, Spannungseinbrüche im Bordnetz zu kompensieren. Insbesondere wegen auftretender Stromspitzen bzw. Spannungseinbrüche bedurften bisher verschiedene Geräte Spezifikationen zum Schutz. Diese können entfallen. Der Einsatz eines derartigen Energiespeichers / Energiequelle verlängert aber auch die Funktionsdauer der im Fahrzeug eingebauten elektronischen Verbraucher. Speziell die Schonung der Batterie bewirkt, dass Wartungszyklen entfallen können. Die Häufigkeit eines Defektes der Batterie wird gleichfalls reduziert.

Ein Vorteil ist, dass unabhängig vom Ladezustand der Fahrzeugbatterie der Motor auch bei tiefen Temperaturen gestartet werden kann. Das Bordnetz wird durch die Energieversorgungsschaltung mit den Doppelschichtkondensatoren gefiltert.

Anhand eines Ausführungsbeispiels mit Zeichnung soll die Erfindung näher erläutert werden. Es zeigt:
- Fig. 1: ein Prinzipschaltbild einer elektrischen Anbindung eines zusätzlichen Energiespeichers in ein Bordnetz,
- Fig. 2: eine Darstellung der Anbindung in einem Gehäuse,
- Fig. 2a: eine Ausschnittsdarstellung aus Fig. 2,
- Fig. 2b: eine Draufsicht A aus Fig. 2.

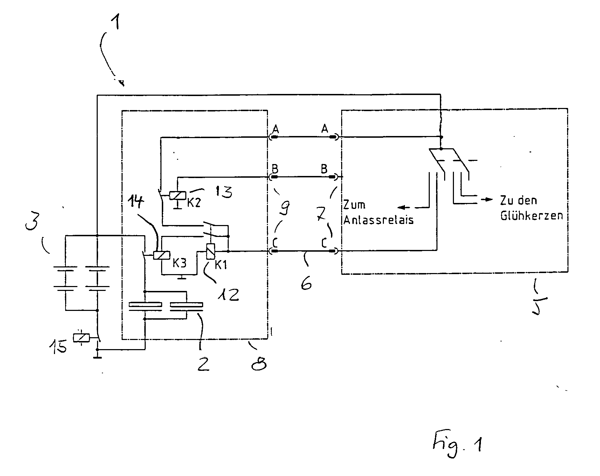

In Fig. 1 ist als Prinzipschaltbild eine Energieversorgungsschaltung 1 zum Zuschalten eines zugehörigen Energiespeichers 2 zu einer bordeigene Batterie 3 eines nicht näher dargestellten Fahrzeuges, hier vorzugsweise mit einem gleichfalls nicht dargestellten Dieselmotor, aufgezeigt. Die Energieversorgungsschaltung 1 besteht hierbei aus einer Verschaltung verschiedener Bauelemente, wie Mittel 12, 14 zum Um- bzw. Zuschalten des Energiespeichers 2, beispielsweise einem Relais K1 und K3 als Umschaltrelais, Mittel 13 zum Schalten eines Haltekreises des Mittels 12, wenn dies ein Relais ist, wie beispielsweise ein Halterelais K2 und einem Batterierelais 15. Der Energiespeicher 2 besteht aus mehreren, miteinander in Reihe verschaltete Doppelschichtkondensatoren 4, vorzugsweise UltraCaps. Dieses sind in einem bevorzugten Ausführungsbeispiel 12 Zellen, die zu zwei Modulen 10 verknüpft sind.

Im Steuerpult 5 bzw. durch den Steuerknoten erfolgt die Zuschaltung der Energieversorgungsschaltung 1 zu den entsprechenden Verbrauchern (beispielsweise Glühkerze, Anlassrelais). Die elektrische Verbindung mit dem Bordnetz bzw. dem Schaltpult 5 oder dem Steuerknoten im Fahrzeug erfolgt in einer bevorzugten Variante über eine dreiadrige Leitung 6, beispielsweise mit einem Steckkontakt, wobei eine entsprechende Buchse 7 beispielsweise im Schaltpult 5 eingebunden ist.

Der Energiespeicher 2 ersetzt in seiner Funktion einen Batteriezweig und stellt dafür eine der Batteriespannung äquivalente gleiche Spannung zur Verfügung, im vorliegenden Fall 28 V. Beim Startvorgang wird z. Beispiel mit dem Vorglühen das Relais K1 und somit auch das Relais K3 geschaltet. Die gespeicherte Energie aus den Doppelschichtkondensatoren 4 steht dem Bordnetz solange zur Verfügung, bis durch eine Abschaltung des Motors das Relais K2 den Selbsthaltezweig von K1 unterbricht.

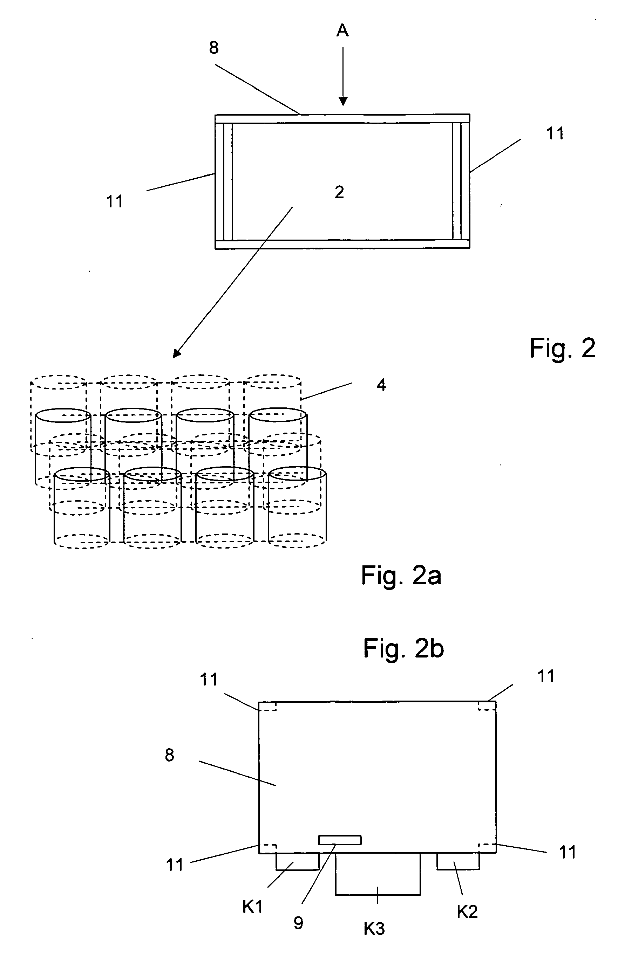

In einer bevorzugten Ausführung nach Fig. 2 sind der Energiespeicher 2 sowie die elektrisch Anbindung im Gehäuse 8 untergebracht. Dies ermöglicht neben einem stationären Einbau auch die Möglichkeit einer tragbaren Starthilfe. In diesem Fall ist auch eine Buchse 9 im Gehäuse 8 vorzusehen.

Der Energiespeicher 2 setzt sich vorzugsweise aus den beiden Modulen 10 zusammen, die durch mehrere Doppelschichtkondensatoren 4 gebildet werden (Fig.2a), und in einer ersten Variante vorzugsweise mit den Kontakten zueinander gestapelt und durch kurze Leitungen (nicht näher dargestellt) verbunden sind. In einer weiteren Variante sind die Module 10 nebeneinander angeordnet.

Diese beiden Varianten können auch für die Integration im Gehäuse 8 gelten. Für eine starre Verbindung ist es dann bevorzugt vorgesehen, dass die Module 10 durch vier Stützen 11 miteinander beispielsweise verschraubt sind. Die Relais K1, K2, K3 sowie der Energiespeicher 2 werden mit Montageblechen bevorzugt direkt am Gehäuse 8, beispielsweise an den Stützen 11 angebaut (Fig. 2b).

Die Gehäusekonstruktion, in den bevorzugten Abmaßen 480/260/265 mm sowie dem geringen Gewicht, gewährleistet eine kompakte, auch tragbare Bauform und beansprucht nur einen geringeren Platz im Fahrzeug und ist auch für Otto-Motore oder Hybridfahrzeuge verwendbar.

Es versteht sich, dass der Einsatz bzw. das Zuschalten der Energieversorgungsschaltung 1 nicht auf einen Startvorgang eines Fahrzeugmotors beschränkt ist. So kann auch zu einem späteren Zeitpunkt ein Zuschalten aktiviert werden. Gleiches trifft für das Deaktivieren der Energieversorgungsschaltung 1, also das Herausnehmen aus dem Bordnetz zu. Auch ist der Einsatz für eine Stromversorgung an sonstigen Aggregaten möglich.

Anstelle von Leitungen 6 sind auch Stromschienen oder dergleichen denkbar.

## Patentansprüche

1. Energieversorgungsschaltung (1) zum Starten eines Motors, insbesondere eines Fahrzeugmotors, aufweisend
- mehrere, in Reihe geschaltete Doppelschichtkondensatoren (4) zu einem Energiespeicher (2),
- erste Mittel (12, 14) zum Um- bzw. Zuschalten des Energiespeichers (2) zu einer Batterie (3) eines Versorgungsnetzes für den Motor,
- eine Verbindung (6) zu einem Steuerknoten (5), der mit der Batterie (3) des Netzes funktional in Verbindung steht, wobei
- beim gewolltem Zuschalten des Energiespeichers (2) das erste Mittel (12) und das Batterierelais (K3) geschaltet werden und
- die gespeicherte Energie des Energiespeichers (2) dem Versorgungsnetz solange zur Verfügung steht, bis durch eine gewollte Abschaltung des Energiespeichers (2) das zweite Mittel (13) den Haltezweig des ersten Mittels (12) unterbricht.

2. Energieversorgungsschaltung (1) zum Starten eines Motors, insbesondere eines Fahrzeugmotors, aufweisend
- mehrere, in Reihe geschaltete Doppelschichtkondensatoren (4) zu einem Energiespeicher (2), die in einem Gehäuse (8) untergebracht sind,
- erste Mittel (12, 14) zum Um- bzw. Zuschalten des Energiespeichers (2) zu einer Batterie (3) eines Versorgungsnetzes für den Motor,
- die im oder am Gehäuse (8) integriert sind,
- eine Verbindung (6) zu einem Steuerknoten (5), der mit der Batterie (3) des Netzes funktional in Verbindung steht, wobei
- beim gewolltem Zuschalten des Energiespeichers (2) das erste Mittel (12) und das Batterierelais (K3) geschaltet werden und
- die gespeicherte Energie des Energiespeichers (2) dem Versorgungsnetz solange zur Verfügung steht, bis durch eine gewollte Abschaltung des Energiespeichers (2) das zweite Mittel (13) den Haltezweig des ersten Mittels (12) unterbricht.

3. Energieversorgungsschaltung nach Anspruch 1 oder 2, **dadurch gekennzeichnet, dass** die zu zwei Modulen (10) zusammengefassten Doppelschichtkondensatoren (4) des Energiespeichers (2) mit den Kontakten zueinander gestapelt und durch Leitungen elektrisch verbunden sind.

4. Energieversorgungsschaltung nach Anspruch 1 oder 2, **dadurch gekennzeichnet, dass** die zu zwei Modulen (10) zusammengefassten Doppelschichtkondensatoren (4) nebeneinander angeordnet und elektrisch miteinander verschaltet sind.

5. Energieversorgungsschaltung nach Anspruch 2 oder 3, **dadurch gekennzeichnet, dass** für eine starre Verbindung die Module (10) durch vier Stützen (11) miteinander beispielsweise verschraubt sind.

6. Energieversorgungsschaltung nach Anspruch 1 oder 2, **dadurch gekennzeichnet, dass** ein gewolltes Zuschalten der Startvorgang ist.

7. Energieversorgungsschaltung nach Anspruch 1 oder 2, **dadurch gekennzeichnet, dass** ein gewolltes Abschalten die Abschaltung eines Motors ist.

8. Energieversorgungsschaltung nach einem der vorgenannten Ansprüche 1 bis 7, **dadurch gekennzeichnet, dass** die Verbindungsleitung (6) einen oder zwei Steckkontakte einseitig oder beidseitig aufweist.

9. Energieversorgungsschaltung nach Anspruch 8, **dadurch gekennzeichnet, dass** der Steuerknoten (5) eine Buchse (7) besitzt.

10. Energieversorgungsschaltung nach Anspruch 8 oder 9, **dadurch gekennzeichnet, dass** im / am Gehäuse (8) eine Buchse (9) vorgesehen ist.
